# EUROPEAN PATENT APPLICATION

(11) **EP 4 379 552 A1**
(43) Date of publication of application: **05.06.2024**
(21) Application number: 22851638.1
(22) Date of filing: 05.05.2022
(51) Int. Cl.: G06F 9/54

(54) **INFORMATION PROCESSING METHOD, TERMINAL DEVICE, CLOUD SERVER, AND STORAGE MEDIUM**

(30) Priority: 02.08.2021 CN 202110880837
(71) Applicant: ZTE Corporation, Shenzhen, Guangdong 518057 (CN)
(72) Inventor: ZHOU, Ji, Shenzhen, Guangdong 518057 (CN)
(74) Representative: Savi, Massimiliano
(86) International application number: PCT/CN2022/091021
(87) International publication number: WO 2023/010918

(57) **Abstract**

An information processing method, a terminal device, a cloud server, and a storage medium. The information processing method comprises: acquiring power supply state information (S110); sending the power supply state information to a cloud server, so that the cloud server generates power supply state icon information according to the power supply state information (S120); receiving first cloud desktop information sent by the cloud server, wherein the first cloud desktop information comprises the power supply state icon information (S130); and displaying a first cloud desktop according to the first cloud desktop information, wherein a power supply state icon corresponding to the power supply state icon information is displayed in the first cloud desktop (S140).

## Description

### CROSS-REFERENCE TO RELATED APPLICATION

This application is filed on the basis of the Chinese patent application No. 202110880837.X filed August 2, 2021, and claims priority of the Chinese patent application, the entire contents of which are incorporated herein by reference.

### TECHNICAL FIELD

The present disclosure relates to the technical field of computers, in particular to a method for processing information, a terminal device, a cloud server, and a storage medium.

### BACKGROUND

Cloud desktop technology, also known as desktop virtualization technology or cloud computer technology, is a new mode and technology to replace traditional computers. With the cloud desktop technology, users do not need to buy a computer. The central processing unit (CPU), memory, hard disk, and other components contained in a computer will be virtualized in the cloud server, and users only need to use the corresponding terminal device to connect the monitor, keyboard, and mouse, and access the virtual host in the cloud server through the client installed on the terminal device to achieve interactive operation and achieve the same experience as using a computer.

However, there is still a gap between the features available in current cloud desktops and those available in traditional computers, such that the users are unable to maintain their original usage habits, and the user experience is not desired.

### SUMMARY

The following is a summary of the subject matter described herein. This summary is not intended to limit the scope of protection of the claims.

Provided are a method for processing information, a terminal device, a cloud server, and a storage medium in some embodiments of the present disclosure.

According to an embodiment of the present disclosure, there is provided a method for processing information, which includes, acquiring power state information; sending the power state information to a cloud server, such that the cloud server generates power state icon information according to the power state information; receiving first cloud desktop information sent by the cloud server; where the first cloud desktop information includes the power state icon information; and displaying a first cloud desktop according to the first cloud desktop information; where the first cloud desktop displays a power state icon corresponding to the power state icon information.

According to another embodiment of the present disclosure, there is provided a method for information processing, which includes, receiving power state information sent by a terminal device; generating power state icon information according to the power state information; and sending first cloud desktop information to the terminal device, such that the terminal device displays a first cloud desktop according to the first cloud desktop information; where the first cloud desktop information includes power state icon information, and a power state icon corresponding to the power state icon information is displayed on the first cloud desktop.

According to yet another embodiment of the present disclosure, there is provided a terminal device, which includes, a device control module, which is configured to acquire power state information; a first redirection module, which is configured to send the power state information to the cloud server, such that the cloud server generates power state icon information according to the power state information; the first redirection module is further configured to receive first cloud desktop information sent by the cloud server; where the first cloud desktop information includes the power state icon information; and a display module, which is configured to display a first cloud desktop according to the first cloud desktop information; where a power state icon corresponding to the power state icon information is displayed on the first cloud desktop.

According to yet another embodiment of the present disclosure, there is provided a cloud server, which includes, a second redirection module, which is configured to receive power state information sent by a terminal device; an information processing module, which is configured to generate power state icon information according to the power state information; where, the second redirection module, is further configured to send first cloud desktop information to the terminal device, such that the terminal device displays the first cloud desktop according to the first cloud desktop information; the first cloud desktop information includes the power state icon information, and a power state icon corresponding to the power state icon information is displayed on the first cloud desktop.

According to yet another embodiment of the present disclosure, there is provided a terminal device, which includes a memory, a processor, and a computer program stored in the memory and executable on the processor which, when executed by the processor, causes the processor to carry out the corresponding method as described above.

According to yet another embodiment of the present disclosure, there is provided a cloud server, which includes a memory, a processor, and a computer program stored in the memory and executable by the processor which, when executed by the processor, causes the processor to carry out the corresponding method as described above.

According to yet another embodiment of the present disclosure, there is provided a computer-readable storage medium storing a computer-executable instruction which, when executed by a processor, causes the processor to carry out any one of the methods as described above.

Other features and advantages of the present disclosure will be illustrated in the following description, and in part will be apparent from the description, or may be understood by practicing the present disclosure. The objects and other advantages of the present disclosure can be achieved and obtained by the structure particularly set forth in the description, claims, and drawings.

### BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.
FIG. 1 depicts a schematic diagram showing a system architecture in which a method for processing information according to an embodiment of the present disclosure is carried out;
FIG. 2 depicts a flowchart showing a method for processing information according to an embodiment of the present disclosure;
FIG. 3 depicts a flowchart showing a method for processing information according to another embodiment of the present disclosure;
FIG. 4 depicts a flowchart showing a method for processing information according to another embodiment of the present disclosure;
FIG. 5 depicts a flowchart showing sub-operations of operation S200 in FIG. 4;
FIG. 6 depicts a flowchart showing a method for processing information according to another embodiment of the present disclosure;
FIG. 7 depicts a flowchart showing a method for processing information according to another embodiment of the present disclosure;
FIG. 8 depicts a flowchart showing a method for processing information according to another embodiment of the present disclosure;
FIG. 9 depicts a flowchart showing sub-operations of operation S380 in FIG. 8;
FIG. 10 depicts a schematic diagram showing a terminal device according to an embodiment of the present disclosure; and
FIG. 11 depicts a schematic diagram showing a cloud server according to an embodiment of the present disclosure.

### DETAILED DESCRIPTION

The purpose, technical scheme, and advantages of the present disclosure will become apparent through the following description for various embodiments in conjunction with the drawings. It should be understood that the embodiments described here are intended for illustration but not limitation to the present disclosure.

It shall be noted that, in some cases, the steps shown or described may be performed in a different order than the logical order shown in the flowcharts. It should be noted that the terms "first" and "second", if used in the description and the drawings are intended to distinguish similar objects, and do not necessarily imply any specific order or sequence.

There are provided a method for processing information, a terminal device, a cloud server, and a storage medium in some embodiment of the present disclosure. According to an embodiment of the present disclosure, power state information is sent to the cloud server, such that the cloud server generates power state icon information according to the power state information. Then first cloud desktop information sent by the cloud server is received, where the first cloud desktop information includes the power state icon information. And then, a first cloud desktop is displayed according to the first cloud desktop information, where the first cloud desktop includes a power state icon corresponding to the power state icon information. Accordingly, the power state icon of a user's local terminal device can be displayed on a first cloud desktop. That is, according to an embodiment, the power state information of the user's local terminal device can be redirected to the cloud desktop, such that the user can keep the original usage habit and the user's experience is enhanced.

Some embodiments of the present disclosure will be further illustrated with reference to the drawings.

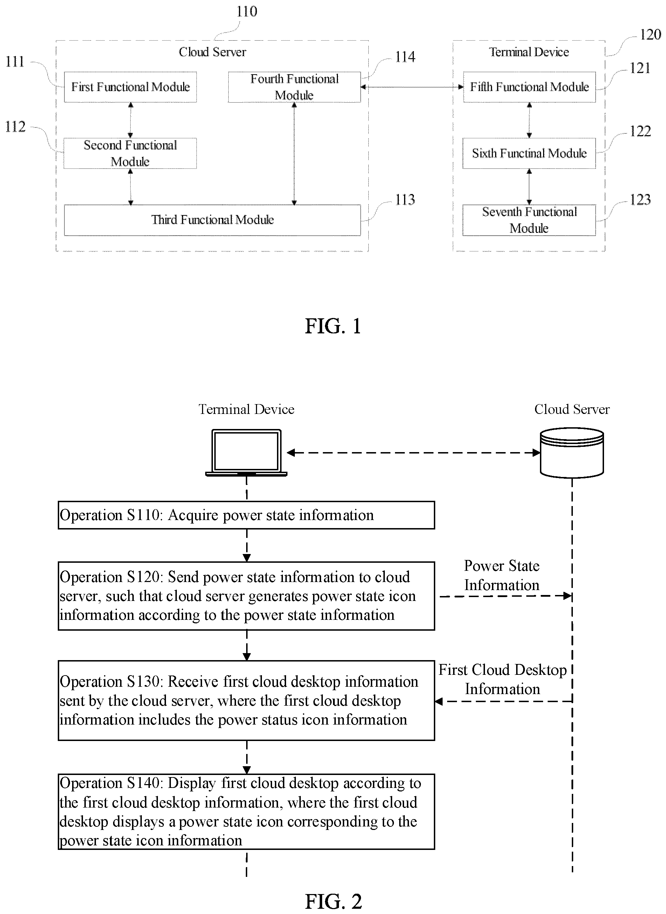

FIG. 1 depicts a schematic diagram showing a system architecture in which a method for processing information according to an embodiment of the present disclosure is carried out. As shown in FIG. 1, the system architecture includes a cloud server 110 and a terminal device 120. The cloud server 110 and the terminal device 120 are communicatively connected with each other.

The cloud server 110 is provided with a first functional module 111, a second functional module 112, a third functional module 113, and a fourth functional module 114, where the first functional module 111, the second functional module 112, the third functional module 113 and the fourth functional module 114 are connected in sequence.

The terminal device 120 is provided with a fifth functional module 121, a sixth functional module 122, and a seventh functional module 123, where the fifth functional module 121, the sixth functional module 122, and the seventh functional module 123 are connected in sequence. The terminal device 120 may be a notebook, a tablet, a smartphone, a smartwatch, or a smart wearable device, etc., and the present disclosure is not limited thereto.

The first functional module 111 is enabled to obtain the related information about the battery level, current charging state, current power mode, and the like, from the second functional module 112 through an Advanced Configuration and Power Management Interface (ACPI), and to provide an interface that displays the battery level, alarm and prompt information and the like. In addition, the first functional module 111 is further enabled to provide an interface interactive portal for users to set power/battery control strategies.

The second functional module 112 is enabled to implement the power control strategy of the ACPI, including a high-performance mode, a balanced mode, and a power-saving mode. Under different modes, the second functional module 112 is enabled to provide users with control of strategies such as screen brightness, display switch, and sleep mode entrance, according to the power supply source (battery power supply or external power supply). In addition, the second functional module 112 is further enabled to provide users with more power control strategies, including power control strategies such as an option as to whether a password is required for device wake-up, an option as to whether to turn off the hard disk regularly, an option as to whether to show slides in the desktop background, a setting of the energy-saving mode of a wireless network adapter, a setting of Universal Serial Bus (USB), management of PCI-Express link state, power management of processor, and management of different battery power levels. The second functional module 112 is enabled to provide an uplink interface for the first functional module 111 to call and a downlink interface for the third functional module 113 to respond.

The third functional module 113 is enabled to, capture a power control instruction sent by the second functional module 112, convert the power control instruction into a device-recognizable driving instruction, and send the driving instruction to the fourth functional module 114. In addition, the third functional module 113 is further enabled to send information such as power state information sent by the fourth functional module 114 to the second functional module 112 through a power control interface. It should be noted that in the case that the cloud server 110 supports ACPI, the third functional module 113 can directly and transparently transmit the interface message of ACPI.

The fourth functional module 114 is enabled to establish a virtual link for network communication with the fifth functional module 121. The fourth functional module 114 is enabled to transparently transmit the driving instruction from the third functional module 113 to the fifth functional module 121 through the virtual link. In addition, the fourth functional module 114 is further enabled to receive information such as power state information and query result information from the fifth functional module 121 through the virtual link, and to transparently transmit such information to the third functional module 113.

The fifth functional module 121 is enabled to establish a virtual link for network communication with the fourth functional module 114. The fifth functional module 121 is enabled to receive from the fourth functional module 114, the driving instruction that comes from the third functional module 113 through the virtual link, and to convert the driving instruction into a power control instruction that can be recognized by the local operating system, then to send the power control instruction to the sixth functional module 122. In addition, the fifth functional module 121 is further enabled to receive information such as power state information and query result information from the sixth functional module 122, and send such information to the fourth functional module 114 through the virtual link. It should be noted that in the case that the cloud server 110 supports ACPI, the fifth functional module 121 can directly and transparently transmit the interface message of ACPI.

The sixth functional module 122 is enabled to implement a local power control strategy. In particular, the sixth functional module 122 is enabled to provide an uplink interface for the fifth functional module 121 to call and a downlink interface for the seventh functional module 123 to respond.

The seventh functional module 123 is enabled to adapt to the local hardware devices such as a battery hardware device and a power control chip. The seventh functional module 123 is enabled to obtain the power state information from a local hardware device and send the power state information to the sixth functional module 122 through the local power control interface. In addition, the seventh functional module 123 is further enabled to respond to the power control instruction that can be recognized by the local operating system sent by the sixth functional module 122, to convert the power control instruction into a driving instruction that can be recognized by the local hardware, and to control the hardware devices such as the battery hardware device or the power control chip to perform the corresponding power control strategy according to the driving instruction .

It should be noted that before the fourth functional module 114 and the fifth functional module 121 establish a virtual link for network communication, the cloud server 110 and the terminal device 120 can first perform a negotiation regarding the ACPI standard support capability. The third functional module 113 and the fifth functional module 121 can directly and transparently transmit the ACPI interface message when both of them support the ACPI standard. In the case that the cloud server 110 does not support the ACPI standard, both the third functional module 113 and the fifth functional module 121 need to convert the related instruction information to meet the requirements before sending the instruction information.

The system architecture and application scenarios described in an embodiment of the present disclosure are intended for a better understanding of rather than limitations to the technical scheme of various embodiments of the present disclosure. It is known to those having ordinary skills in the art that, with the evolution of the system architecture and the emergence of new application scenarios, the technical scheme provided by the embodiment of the present disclosure is also applicable to similar technical problems.

It can be understood by those having ordinary skills in the art that the system architecture shown in FIG. 1 does not constitute a limitation to the embodiment of the present disclosure, and may include more or fewer components than those shown, or some components may be combined, or have different arrangements of components.

Based on the above system architecture, some embodiments of the method for processing information of the present disclosure are proposed below.

FIG. 2 depicts a flowchart showing a method for processing information according to an embodiment of the present disclosure. The method can be applied to a terminal device, such as the terminal device 120 in the system architecture shown in FIG. 1. The method may include, but is not limited to, operations S 110 to S 140.

At S 110, power state information is acquired.

It should be noted that the power state information may include battery level information, current charging state information, current power mode information, etc., and the present disclosure is not limited thereto.

In an embodiment, the terminal device can receive the power information inquiry instruction sent by a cloud server, and then obtain the corresponding power state information according to the power information inquiry instruction. The power information inquiry instruction can be an inquiry instruction for inquiring about the battery level, an inquiry instruction for inquiring about the current charging state, or an inquiry instruction for inquiring about the current power mode, etc., and the present disclosure is not limited thereto.

In an embodiment, the power state information can be obtained from a hardware device such as a local battery hardware device or a power control chip through the seventh functional module 123 as shown in FIG. 1.

In an embodiment, when the operation of obtaining power state information is performed according to the power information inquiry instruction from the cloud server, the power information inquiry instruction from the cloud server can be received through the fifth functional module 121 as shown in FIG. 1. Then in the fifth functional module 121, the power information inquiry instruction is converted into an inquiry instruction that can be recognized by the local operating system. Then the inquiry instruction that can be recognized by the local operating system is sent to the seventh functional module 123 as shown in FIG. 1 through the sixth functional module 122 as shown in FIG. 1. Thereby, the seventh functional module 123 can obtain power state information from the local hardware devices such as the battery hardware device or the power control chip according to the inquiry instruction that can be recognized by the local operating system.

At S120, the power state information is sent to the cloud server, such that the cloud server generates power state icon information according to the power state information.

In this operation, since the power state information is obtained at operation S110, the power state information can be sent to the cloud server, such that the cloud server generates corresponding power state icon information according to the power state information. As such, the cloud server can generate cloud desktop information including the power state icon information in subsequent operations.

In an embodiment, the power state information can be sent to the cloud server through the fifth functional module 121 as shown in FIG. 1, such that the cloud server can generate corresponding power state icon information according to the power state information.

At S130, first cloud desktop information sent by the cloud server is received, where the first cloud desktop information includes the power state icon information.

It should be noted that after the user logs in to the cloud desktop client through the terminal device, the terminal device receives the cloud desktop information regularly sent by the cloud server, so as to display the corresponding cloud desktop according to the cloud desktop information. Since the terminal device sends the power state information to the cloud server in step S120, the cloud server carries the power state icon information corresponding to the power state information in the first cloud desktop information that is sent to the terminal device. Hence, in this operation, the terminal device can receive the first cloud desktop information including the power state icon information sent by the cloud server, so that in the subsequent operations, the first cloud desktop including the power state icon corresponding to the power state icon information can be displayed according to the first cloud desktop information.

In an embodiment, the first cloud desktop information sent by the cloud server can be received through the fifth functional module 121 as shown in FIG. 1.

At S140, the first cloud desktop is displayed according to the first cloud desktop information, where the first cloud desktop displays a power state icon corresponding to the power state icon information.

In this operation, because the first cloud desktop information sent by the cloud server is received in operation S130, and the first cloud desktop information includes the power state icon information, the first cloud desktop can be displayed according to the first cloud desktop information, and the power state icon corresponding to the power state icon information can be displayed on the first cloud desktop. As such the first cloud desktop can have the function of displaying the power state icon of the local terminal device that a traditional computer has, such that the user can keep the original usage habit and the user's experience is enhanced.

Because the cloud desktop corresponds to a virtual host in the cloud server, the current cloud desktop does not have the ability of traditional computers to display the power state of the local terminal device of the user. In view of this, in this embodiment, the method including the above operations S 110 to S 140 can be performed, such that after the power state information is acquired, the power state information is sent to the cloud server, such that, the cloud server generates the power state icon information according to the power state information. Then the first cloud desktop information including the power state icon information sent by the cloud server is received. And then the first cloud desktop including the power state icon corresponding to the power state icon information is displayed according to the first cloud desktop information. As a consequence, according to this embodiment, the power state icon of the user's local terminal device can be displayed on the first cloud desktop. That is, according to this embodiment, the power state information of the user's local terminal device can be redirected to the cloud desktop, so that the cloud desktop can have the function of displaying the power state icon of the local terminal device that the traditional computers have. For example, the user can see the battery level information of the local terminal device in the toolbar at the lower right corner of the cloud desktop in real-time. Hence, the user can keep the original habit of using the computer, thus the user's experience is enhanced.

It should be noted that the power state information may include information such as battery level information, current charging state information, or current power mode information. Thus, the power state icon information generated from the power state information may include power level icon information, charging icon information, or mode icon information, etc. Therefore, the power state icon corresponding to the power state icon information may include the power level icon, charging icon, or power mode icon, etc., and the present disclosure is not limited thereto.

In an embodiment, when the power state information includes power level information and the power level information indicates a power level that is less than a preset power level threshold, the corresponding power state icon can be a power level alarm icon. For example, when the battery level of the local terminal device is less than the preset power level threshold, the local terminal device can display the power alarm icon in the toolbar at the lower right corner of the cloud desktop instead of prompting the low power alarm, so as to prompt the local terminal device to be in a low power alarm state, so that the user can aware of the power usage of the local terminal device when looking at the power state icon displayed on the cloud desktop. Hence, the user can keep the original habit of using the computer, thus the user's experience is enhanced.

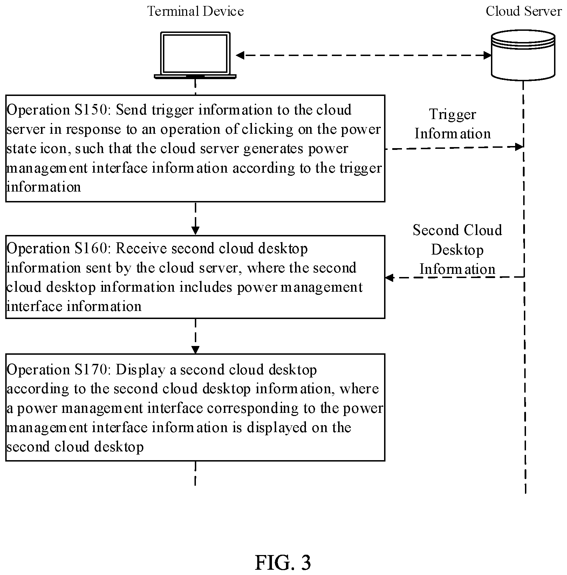

FIG. 3 further illustrates the method for processing information according to an embodiment of the present disclosure. The method may also include but is not limited to operations S150, S160, and S170.

At S150, in response to an operation of clicking on the power state icon, trigger information is sent to the cloud server, such that the cloud server generates power management interface information according to the trigger information.

The first cloud desktop including the power state icon was displayed according to the first cloud desktop information in the previous operation S140. Hence, in this operation, when the user clicks the power state icon, for example, when the user clicks the power state icon displayed on the first cloud desktop with a mouse, the terminal device can respond to the operation and send trigger information to the cloud server, such that the cloud server can generate power management interface information according to the trigger information. As such, the cloud server can generate cloud desktop information including the power management interface information in a subsequent operation.

In an embodiment, the trigger information can be sent to the cloud server through the fifth functional module 121 as shown in FIG. 1, such that the cloud server can generate power management interface information according to the trigger information.

At S160, second cloud desktop information sent by the cloud server is received, where the second cloud desktop information includes power management interface information.

The trigger information was sent to the cloud server in the previous operation S150 such that the cloud server generates the power management interface information according to the trigger information. Hence, the cloud server carries the power management interface information in the second cloud desktop information sent to the terminal device, such that the terminal device can receive the second cloud desktop information including the power management interface information sent by the cloud server. As such, the second cloud desktop including the power management interface corresponding to the power management interface information can be displayed according to the second cloud desktop information in a subsequent operation.

In an embodiment, the power management interface information may include power mode selection control information, power control strategy content selection information, etc., and the present disclosure is not limited thereto.

In an embodiment, the second cloud desktop information sent by the cloud server can be received through the fifth functional module 121 as shown in FIG. 1.

At S170, a second cloud desktop is displayed according to the second cloud desktop information, where a power management interface corresponding to the power management interface information is displayed on the second cloud desktop.

The second cloud desktop information that includes the power management interface information, which was sent by the cloud server is received in previous operation S160. Hence, the second cloud desktop can be displayed according to the second cloud desktop information, and the power management interface corresponding to the power management interface information is displayed on the second cloud desktop. As such, a user can set the power control strategy for the local terminal device through the power management interface.

It should be noted that, the power management interface information may include power mode selection control information, power control strategy content selection information, etc. Thus, the power management interface corresponding to the power management interface information may include the power mode selection control, and the power control strategy content option, etc., and the present disclosure is not limited thereto. For example, a user can choose different power control strategy modes such as a high-performance mode, a balanced mode, or a power-saving mode on the power management interface. In different modes, the user can further choose different strategy controls such as screen display brightness, display switch, and sleep mode entrance.

In this embodiment, the method for processing information that includes the above operations S150 to S170 is provided. According to the method, when the user clicks the power state icon, trigger information is sent to the cloud server, such that the cloud server generates power management interface information according to the trigger information. Then the second cloud desktop information including the power management interface information sent by the cloud server is received. Then the second cloud desktop including the power management interface corresponding to the power management interface information is displayed according to the second cloud desktop information. Hence, according to this embodiment, the power management interface can be displayed on the second cloud desktop, such that the user can set the power control strategy for the local terminal device through the power management interface. That is to say, according to this embodiment, the hardware devices such as the battery hardware device and power control chip of the user's local terminal device can be redirected to the cloud desktop, such that the cloud desktop can have the function of setting the power control strategy for the local terminal device, as the traditional computers have. For example, the user can click on the power state icon on the cloud desktop to display the power management interface on the cloud desktop, and then select power control to set the power control strategy. For example, if the device is set to sleep after 10 minutes of inactivity, then the local terminal device will automatically enter sleep mode after 10 minutes of inactivity, instead of the virtual machine in the cloud server corresponding to the cloud desktop entering sleep mode.

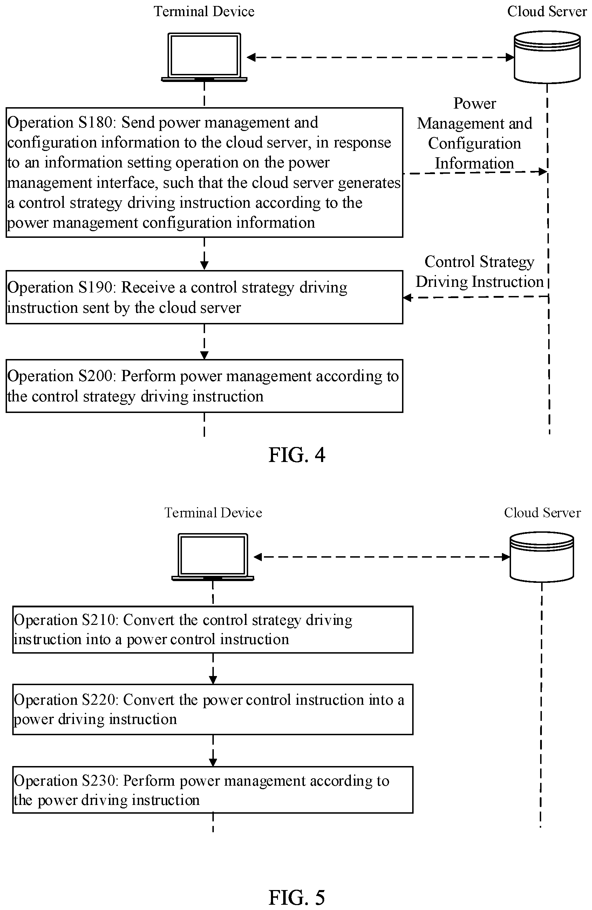

FIG. 4 further illustrates the method for processing information according to an embodiment of the present disclosure. The method may also include but is not limited to operations S180, S190, and S200.

At S 180, power management and configuration information is sent to the cloud server, in response to an information setting operation on the power management interface, such that the cloud server generates a control strategy driving instruction according to the power management and configuration information.

The second cloud desktop including the power management interface was displayed according to the second cloud desktop information in a previous operation S170. Thus, in this operation, when the user performs an information setting operation on the power management interface, the terminal device can obtain the setting information input by the user, generates corresponding power management and configuration information according to the setting information input by the user, and then sends the power management and configuration information to the cloud server. As such, the cloud server can generate a control strategy driving instruction according to the power management and configuration information, such that power management can be performed on hardware devices such as a battery hardware device or a power control chip of terminal devices according to the control strategy driving instruction in a subsequent operation.

In an embodiment, the power management and configuration information can be sent to the cloud server through the fifth functional module 121 as shown in FIG. 1, such that the cloud server can generate control strategy driving instructions according to the power management and configuration information.

At S190, a control strategy driving instruction sent by the cloud server is received.

The power management and configuration information was sent to the cloud server in the previous operation S180, such that the cloud server generates the control strategy driving instruction according to the power management and configuration information. Hence, in this operation, the cloud server sends the control strategy driving instruction to the terminal device, such that the terminal device can receive the control strategy driving instruction sent by the cloud server. As such, the power management for hardware devices such as a battery hardware device or a power control chip can be performed according to the control strategy driving instruction in a subsequent operation.

In an embodiment, the control strategy driving instruction sent by the cloud server can be received through the fifth functional module 121 as shown in FIG. 1.

At S200, power management is performed according to the control strategy driving instruction.

The control strategy driving instruction sent by the cloud server was received in previous operation S190. In this operation, the power management can be performed on hardware devices such as a battery hardware device or a power control chip according to the control strategy driving instruction. That is to say, the cloud desktop can have the power management function for a local terminal device that a traditional computer has. Users can perform the power management of hardware devices such as a battery hardware device or a power control chip of the local terminal device through the power management interface displayed on the cloud desktop, so as to keep the user's original habit of using computers, and the use experience is enhanced.

In an embodiment, the power management can be carried out according to the control strategy driving instruction through the mutual cooperation of the sixth functional module 122 and the seventh functional module 123 as shown in FIG. 1.

In an embodiment, operation S200 is further illustrated, as shown in FIG. 5, in the case that the cloud server does not support the ACPI standard, operation S200 may include but is not limited to operations S210, S220, and S230.

At S210, the control strategy driving instruction is converted into a power control instruction.

It should be noted that when the cloud server does not support the ACPI standard, the terminal device cannot directly recognize the control strategy driving instruction sent by the cloud server. Therefore, after receiving the control strategy driving instruction sent by the cloud server, the control strategy driving instruction can be converted into a power control instruction that can be recognized by the operating system of the terminal device, such that the power management can be carried out according to the power control instruction in a subsequent operation.

In an embodiment, the control strategy driving instruction sent by the cloud server can be converted into the power control instruction that can be recognized by the operating system of the terminal device through the fifth functional module 121 as shown in FIG. 1.

At S220, the power control instruction is converted into a power driving instruction .

The control strategy driving instruction was converted into a power control instruction in previous operation S210. Thus, in this operation, the power control instruction can be further converted into a power driving instruction that can be recognized by hardware devices such as a battery hardware device and a power control chip of the terminal device, such that power management can be carried out according to the power driving instruction in a subsequent operation.

In an embodiment, the power control instruction can be converted into a power driving instruction through the seventh functional module 123 as shown in FIG. 1, such that the power driving instruction can be adapted to hardware devices such as a battery hardware device and a power control chip of the terminal device.

At S230, power management is performed according to the power driving instruction.

The power control instruction was converted into a power driving instruction in the previous operation S220. Thus, in this operation, power management can be performed on the hardware devices such as the battery hardware device or the power control chip of the terminal device according to the power driving instruction. For example, a battery hardware device of the terminal device is set to any one of a high-performance mode, a balanced mode, or a power-saving mode, according to the power driving instruction.

In an embodiment, the seventh functional module 123 as shown in FIG. 1 can perform power management on the hardware devices such as the battery hardware device or the power control chip of the terminal device according to the power driving instruction.

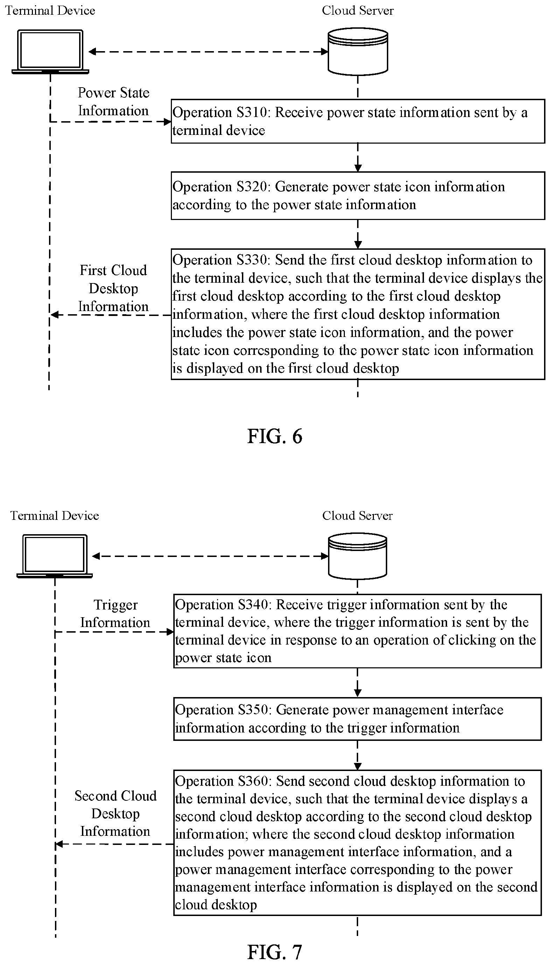

FIG. 6 depicts a flowchart showing a method for processing information according to another embodiment of the present disclosure. The method can be applied to a cloud server, such as the cloud server 110 in the system architecture shown in FIG. 1. The method may include, but is not limited to, operations S310 to S330.

At S310, power state information sent by a terminal device is received.

It should be noted that after the terminal device sends the power state information to the cloud server, the cloud server can receive the power state information. As such, the first cloud desktop information including the power state icon information can be generated according to the power state information in a subsequent operation.

It should be noted that the power state information may include battery level information, current charging state information, current power mode information, etc., and the present disclosure is not limited thereto.

In an embodiment, the cloud server can send a power information inquiry instruction to the terminal device, such that the terminal device acquires and sends corresponding power state information according to the power information inquiry instruction. The power information inquiry instruction can be an inquiry instruction for inquiring about the battery level, an inquiry instruction for inquiring about the current charging state, or an inquiry instruction for inquiring about the current power mode, etc., and the present disclosure is not limited thereto.

In an embodiment, the power state information sent by the terminal device can be received through the fourth functional module 114 as shown in FIG. 1.

At S320, power state icon information is generated according to the power state information.

The power state information was received in the previous operation S310. Hence, in this operation the corresponding power state icon information can be generated according to the power state information, such that cloud desktop information including the power state icon information can be generated in a subsequent operation.

It should be noted that the power state information may include information such as battery level information, current charging state information, or current power mode information. Thus, the power state icon information generated from the power state information may include power level icon information, charging icon information, mode icon information, etc, and the present disclosure is not limited thereto.

In an embodiment, the power state information can be generated into power state icon information through the first functional module 111 as shown in FIG. 1.

At S330, the first cloud desktop information is sent to the terminal device, such that the terminal device displays the first cloud desktop according to the first cloud desktop information, where the first cloud desktop information includes the power state icon information, and the power state icon corresponding to the power state icon information is displayed on the first cloud desktop.

It should be noted that after the user logs in to the cloud desktop client through the terminal device, the cloud server regularly sends cloud desktop information to the terminal device, such that the terminal device displays the corresponding cloud desktop according to the cloud desktop information. The power state icon information was generated according to the power state information from the terminal device in the previous operation S320, thus the power state icon information can be carried in the first cloud desktop information sent to the terminal device. Hence, in this operation, the cloud server can send the first cloud desktop information including the power state icon information to the terminal device. As such, the terminal device can display the first cloud desktop including the power state icon corresponding to the power state icon information according to the first cloud desktop information. Thereby, the first cloud desktop can have the function of displaying the power state icon of the local terminal device, as traditional computers have, thus enabling the user to keep the original usage habit and the user's use experience is enhanced.

It should be noted that the power state icon information may include power level icon information, charging icon information, mode icon information, etc. Therefore, the power state icon corresponding to the power state icon information may include the power level icon, charging icon, power mode icon, etc., and the present disclosure is not limited thereto.

Because the cloud desktop corresponds to a virtual host in the cloud server, the current cloud desktop does not have the ability of traditional computers to display the power state of the local terminal device of the user. In view of this, in this embodiment, the method including the above operations S310 to S330 can be performed, such that after the power state information sent by the terminal device is acquired, the power state icon information is generated according to the power state information. Then the first cloud desktop information including the power state icon information is sent to the terminal device. As such, the terminal device can display the first cloud desktop according to the first cloud desktop information, and display the power state icon corresponding to the power state icon information on the first cloud desktop. That is, according to this embodiment, the power state information of the user's local terminal device can be redirected to the cloud desktop, such that the cloud desktop can have the function of displaying the power state icon of the local terminal device, as the traditional computers have. For example, the user can see the battery level information of the local terminal device in the toolbar at the lower right corner of the cloud desktop in real-time. Hence, the user can keep the original habit of using the computer, thus the user's experience is enhanced.

In an embodiment, the first cloud desktop information can be sent to the terminal device through the fourth functional module 114 as shown in FIG. 1.

In an embodiment, when the power state information includes power level information and the power level information indicates a power level that is less than a preset power level threshold, the corresponding power state icon can be a power level alarm icon. For example, when the battery level of the local terminal device is less than the preset power level threshold, the cloud server can generate power level alarm icon information according to the power level information, and carry the power level alarm icon information in the cloud desktop information sent to the terminal device. Thereby, the terminal device can display the cloud desktop including the power level alarm icon corresponding to the power level alarm icon information. That is, the local terminal device can display the power level alarm icon in the toolbar at the lower right corner of the cloud desktop instead of prompting the low power alarm, so as to prompt the local terminal device to be in a low power alarm state, so that the user can be aware of the power usage of the local terminal device when looking at the power state icon displayed on the cloud desktop. Hence, the user can keep the original habit of using the computer, thus the user's experience is enhanced.

FIG. 7 further illustrates the method for processing information according to an embodiment of the present disclosure. The method may also include but is not limited to operations S340, S350, and S360.

At S340, trigger information sent by the terminal device is received, where the trigger information is sent by the terminal device in response to an operation of clicking on the power state icon.

The first cloud desktop information including the power state icon information was sent to the terminal device in the previous operation S330, such that the terminal device displays the first cloud desktop including the power state icon corresponding to the power state icon information according to the first cloud desktop information. Thus, in this operation, when the user clicks on the power state icon, for example, when the user clicks on the power state icon displayed on the first cloud desktop with a mouse, the terminal device can respond to the operation, and sends the trigger information to the cloud server. At this point, the cloud server can receive the trigger information such that the corresponding power management interface information can be generated according to the trigger information in a subsequent operation.

In an embodiment, the trigger information sent by the terminal device can be received through the fourth functional module 114 as shown in FIG. 1.

At S350, power management interface information is generated according to the trigger information.

The trigger information sent by the terminal device was received in the previous operation S340. Thus, the power management interface information can be generated according to the trigger information in this operation, such that the second cloud desktop information carrying the power management interface information can be generated in a subsequent operation.

In an embodiment, the power management interface information may include power mode selection control information, power control strategy content selection information, etc., and the present disclosure is not limited thereto.

In an embodiment, the power management interface information can be generated according to the trigger information through the mutual cooperation of the first functional module 111 and the second functional module 112 as shown in FIG. 1.

At S360, second cloud desktop information is sent to the terminal device, such that the terminal device displays a second cloud desktop according to the second cloud desktop information; where the second cloud desktop information includes power management interface information, and a power management interface corresponding to the power management interface information is displayed on the second cloud desktop.

The power management interface information was generated according to the trigger information in the previous operation S350. Thus, the second cloud desktop information including the power management interface information can be sent to the terminal device in this operation, such that the terminal device displays the second cloud desktop including the power management interface corresponding to the power management interface information according to the second cloud desktop information. Thereby, the user can set the power control strategy for the local terminal device through the power management interface.

It should be noted that, the power management interface information may include power mode selection control information, power control strategy content selection information, etc. Thus, the power management interface corresponding to the power management interface information may include the power mode selection control, and the power control strategy content selection, etc., and the present disclosure is not limited thereto. For example, a user can choose different power control strategy modes such as a high-performance mode, a balanced mode, or a power-saving mode on the power management interface. In different modes, the user can further choose different strategy controls such as screen display brightness, display switch, and sleep mode entrance.

In an embodiment, the second cloud desktop information can be sent to the terminal device through the fourth functional module 114 as shown in FIG. 1.

In this embodiment, the method including the above operations S340 to S360 is provided. According to the method, after receiving the trigger information sent by the terminal device, the power management interface information is generated according to the trigger information. Then the second cloud desktop information including the power management interface information is sent to the terminal device, such that the terminal device can display the second cloud desktop according to the second cloud desktop information, and display the power management interface corresponding to the power management interface information on the second cloud desktop. That is to say, according to this embodiment, the hardware devices such as the battery hardware device and power control chip of the user's local terminal device can be redirected to the cloud desktop, such that the cloud desktop can have the function of setting the power control strategy for the local terminal device, as the traditional computers have. For example, the user can click on the power state icon on the cloud desktop to display the power management interface on the cloud desktop, and then select power control to set the power control strategy. For example, if the device is set to sleep after 10 minutes of inactivity, then the local terminal device will automatically enter sleep mode after 10 minutes of inactivity, instead of the virtual machine in the cloud server corresponding to the cloud desktop entering sleep mode.

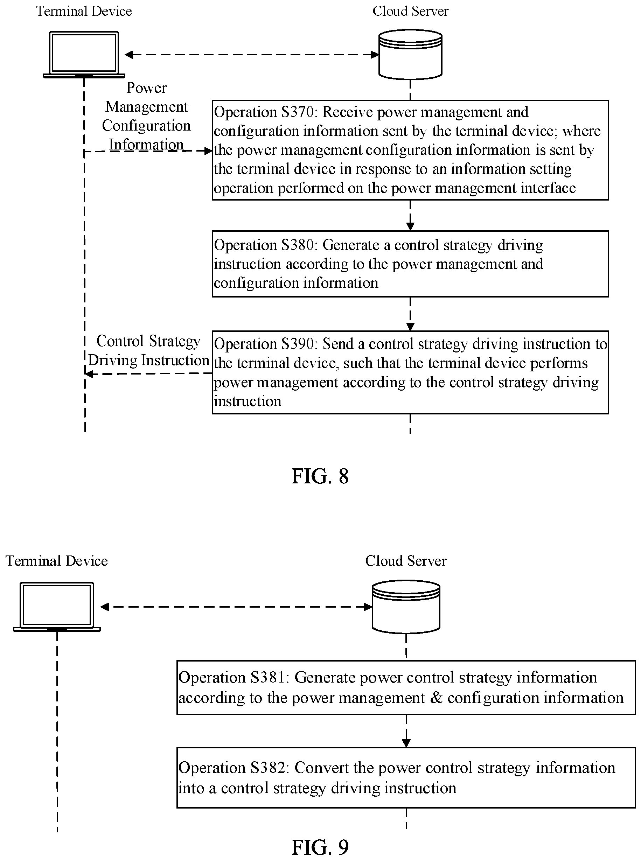

FIG. 8 further illustrates the method for processing information according to an embodiment of the present disclosure. The method may also include but is not limited to operations S370, S380, and S390.

At S370, power management and configuration information sent by the terminal device is received; where the power management and configuration information is sent by the terminal device in response to an information setting operation performed on the power management interface.

In this operation, when the user performs an information setting operation on the power management interface, the terminal device can obtain the setting information input by the user, and generate corresponding power management and configuration information according to the setting information input by the user, and then send the power management and configuration information to the cloud server. Therefore, the cloud server can receive the power management and configuration information, so as to generate the corresponding control strategy driving instruction according to the power management and configuration information in a subsequent operation, to perform power management on the hardware devices of the terminal device, such as the battery hardware device or power control chip.

In an embodiment, the power management and configuration information sent by the terminal device can be received through the fourth functional module 114 as shown in FIG. 1.

At S380, a control strategy driving instruction is generated according to the power management and configuration information.

The power management and configuration information sent by the terminal device was received in the previous operation S370. In this operation, a corresponding control strategy driving instruction can be generated according to the power management and configuration information. As such, the control strategy driving instruction can be sent to the terminal device in a subsequent operation to achieve power management for the terminal device.

In an embodiment, the control strategy driving instruction can be generated according to the power management and configuration information through the second functional module 112 as shown in FIG. 1.

At S390, a control strategy driving instruction is sent to the terminal device, such that the terminal device performs power management according to the control strategy driving instruction.

The control strategy driving instruction was generated according to the power management and configuration information in the previous operation S380. Hence, in this operation, the control strategy driving instruction can be sent to the terminal device, such that the terminal device can perform power management according to the control strategy driving instruction. In other words, the cloud desktop can have the power management function for the local terminal device that traditional computers have. Users can perform the power management of hardware devices such as a battery hardware device or a power control chip of the local terminal device through the power management interface displayed on the cloud desktop, so as to keep the user's original habit of using computers, and the use experience is enhanced.

In an embodiment, the control strategy driving instruction can be sent to the terminal device through the fourth functional module 114 as shown in FIG. 1.

In an embodiment, operation S380 is further illustrated, as shown in FIG. 9, in the case that the cloud server does not support the ACPI standard, operation S380 may include but is not limited to operations S381, and S382.

At S381, power control strategy information is generated according to the power management and configuration information.

It should be noted that when the cloud server does not support the ACPI standard, the cloud server cannot directly generate the control strategy driving instruction suitable for the terminal device according to the power management and configuration information from the terminal device. Therefore, after receiving the power management and configuration information sent by the terminal device, the cloud server can first generate the corresponding power control strategy information according to the power management and configuration information, so as to convert the power control strategy information into a control strategy driving instruction recognizable by the device in a subsequent operation.

In an embodiment, the power control strategy information can be generated according to the power management and configuration information through the second functional module 112 as shown in FIG. 1.

At S382, the power control strategy information is converted into a control strategy driving instruction.

The power control strategy information was generated according to the power management and configuration information in the previous operation S381. In this operation, the power control strategy information can be converted into a control strategy driving instruction that can be recognized by the device. As such, the control strategy driving instruction can be sent to the terminal device in a subsequent operation. As such, the terminal device performs power management for its internal hardware devices such as a battery hardware device or a power control chip according to the control strategy driving instruction.

In an embodiment, the power control strategy information can be converted into the control strategy driving instruction through the third functional module 113 as shown in FIG. 1.

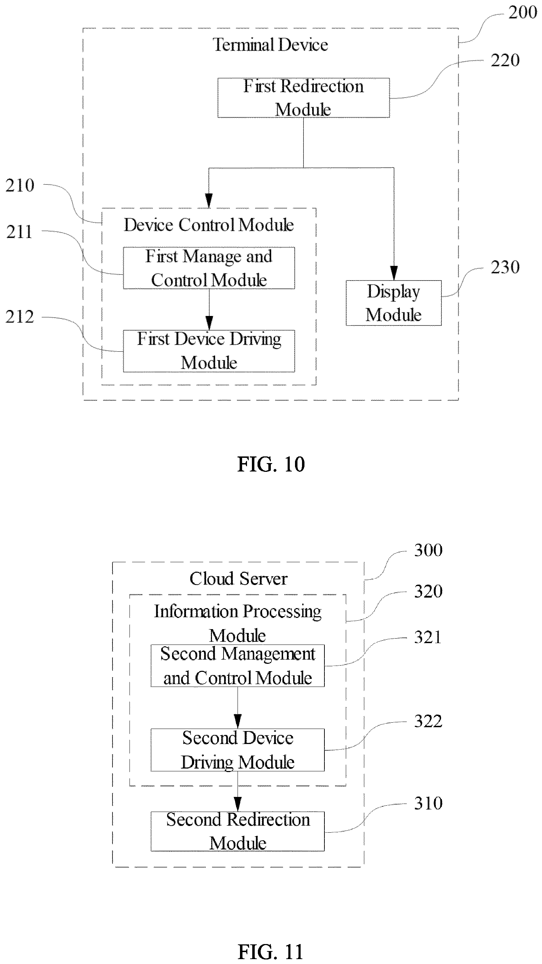

According to another embodiment of the present disclosure, there is provided a terminal device. As shown in FIG. 10, the terminal device 200 includes,
a device control module 210, which is configured to acquire power state information;
a first redirection module 220, which is configured to send power state information to the cloud server, such that the cloud server generates power state icon information according to the power state information; and which is further configured to receive first cloud desktop information sent by the cloud server, where the first cloud desktop information includes power state icon information; and
a display module 230, which is configured to display a first cloud desktop according to the first cloud desktop information, where a power state icon corresponding to the power state icon information is displayed on the first cloud desktop.

In an embodiment, when the power state information includes power level information and the power level information indicates a power level that is less than a preset power level threshold, the power state icon is a power level alarm icon.

In an embodiment, the first redirection module 220 is further configured to send trigger information to the cloud server in response to an operation of clicking on the power state icon, such that the cloud server generates power management interface information according to the trigger information. In an embodiment, the first redirection module 220 is further configured to receive second cloud desktop information sent by the cloud server, where the second cloud desktop information includes power management interface information. In an embodiment, the display module 230 is further configured to display a second cloud desktop according to the second cloud desktop information, where a power management interface corresponding to the power management interface information is displayed on the second cloud desktop.

In an embodiment, the first redirection module 220 is further configured to send power management and configuration information to the cloud server, in response to an information setting operation on the power management interface, such that the cloud server generates a control strategy driving instruction according to the power management and configuration information. In an embodiment, the first redirection module 220, is further configured to receive a control strategy driving instruction sent by the cloud server. The device control module 210 is further configured to perform power management according to the control strategy driving instruction.

In an embodiment, the device control module 210 includes a first management and control module 211, and a first device driving module 212. The first redirection module 220 is further configured to convert the control strategy driving instruction into a power control instruction. The first management and control module 211 is configured to convert the power control instruction into a power driving instruction. The first device driving module 212 is configured to perform power management according to the power driving instruction.

It should be noted that since the terminal device 200 of this embodiment can carry out the method for processing information of any embodiment with the terminal device as the execution subject, the terminal device 200 of this embodiment has the same technical principle and the same technical effect as the method for processing information of any embodiment with the terminal device as the execution subject, so in order to avoid redundancy, it is not repeated here.

According to yet another embodiment of the present disclosure, there is provided a cloud server. As shown in FIG. 11, the cloud server 300 includes,
a second redirection module 310, which is configured to receive power state information sent by a terminal device; and
an information processing module 320, which is configured to generate power state icon information according to the power state information.

The second redirection module 310, is further configured to send the first cloud desktop information to the terminal device, such that the terminal device displays the first cloud desktop according to the first cloud desktop information, where the first cloud desktop information includes the power state icon information, and a power state icon corresponding to the power state icon information is displayed on the first cloud desktop.

In an embodiment, when the power state information includes power level information and the power level information indicates a power level that is less than a preset power level threshold, the power state icon is a power level alarm icon.

In an embodiment, the second redirection module 310 is further configured to receive trigger information sent by the terminal device, where the trigger information is sent by the terminal device in response to an operation of clicking on the power state icon; and an information processing module 320, is further configured to generate power management interface information according to the trigger information. The second redirection module 310, is further configured to send second cloud desktop information to the terminal device, such that the terminal device displays a second cloud desktop according to the second cloud desktop information; where the second cloud desktop information includes power management interface information, and a power management interface corresponding to the power management interface information is displayed on the second cloud desktop.

In an embodiment, the second redirection module 310 is further configured to receive power management and configuration information sent by the terminal device; where the power management and configuration information is sent by the terminal device in response to an information setting operation performed on the power management interface. The information processing module 320, is further configured to generate a control strategy driving instruction according to the power management and configuration information. The second redirection module 310, is further configured to send a control strategy driving instruction to the terminal device, such that the terminal device performs a power management according to the control strategy driving instruction.

In an embodiment, the information processing module 320 includes a second management and control module 321 and a second device driving module 322. The second management and control module 321 is configured to generate power control strategy information according to the power management and configuration information. The second device driving module 322 is configured to convert the power control strategy information into a control strategy driving instruction.

It should be noted that since the cloud server 300 of this embodiment can carry out the method for processing information of any embodiment with the cloud server as the execution subject, the cloud server 300 of this embodiment has the same technical principle and the same technical effect as the method for processing information of any embodiment with the cloud server as the execution subject, so in order to avoid redundancy, it is not repeated here.

According to yet another embodiment of the present disclosure, there is provided another terminal device, which includes a memory, a processor, and a computer program stored in the memory and executable by the processor.

The processor and the memory may be connected by a bus or other means.

As a non-transitory computer-readable storage medium, the memory can be configured to store non-transitory software programs and non-transitory computer-executable programs. In addition, the memory may include high-speed random access memory and non-transitory memory, such as at least one disk memory device, flash memory device, or other non-transitory solid-state memory devices. In some embodiments, the memory may include memories remotely located with respect to the processor, and these remote memories may be connected to the processor through a network. Examples of the above networks include, but are not limited to, the Internet, intranet, local area network, mobile communication network, and combinations thereof.

It should be noted that the terminal device in this embodiment can be implemented as the terminal device 120 in the embodiment shown in FIG. 1. The terminal device in this embodiment can constitute a part of the system architecture of the embodiment shown in FIG. 1, so these embodiments belong to the same invention concept and have the same implementation principles and technical effects, and which will not be described in detail here.

Non-transitory software programs and instructions for the method for processing information in the above embodiments are stored in a memory which, when executed by a processor, causes the processor to carry out the method for processing information, e.g., S110 to S140 described in conjunction with FIG. 2, S150 to S170 described in conjunction with FIG. 3, S180 to S200 described in conjunction with FIG. 4, or S210 to S230 described in conjunction with FIG. 5.

According to yet another embodiment of the present disclosure, there is provided another cloud server, which includes a memory, a processor, and a computer program stored in the memory and executable by the processor.

The processor and the memory may be connected by a bus or other means.

As a non-transitory computer-readable storage medium, the memory can be configured to store non-transitory software programs and non-transitory computer-executable programs. In addition, the memory may include high-speed random access memory and non-transitory memory, such as at least one disk memory device, flash memory device, or other non-transitory solid-state memory devices. In some embodiments, the memory may include memories remotely located with respect to the processor, and these remote memories may be connected to the processor through a network. Examples of the above networks include, but are not limited to, the Internet, intranet, local area network, mobile communication network, and combinations thereof.

It should be noted that the cloud server in this embodiment can be implemented as the cloud server 110 in the embodiment shown in FIG. 1. The cloud server in this embodiment can constitute a part of the system architecture of the embodiment shown in FIG. 1, so these embodiments belong to the same invention concept and have the same implementation principles and technical effects, and which will not be described in detail here.

Non-transitory software programs and instructions for the method for processing information in the above embodiments are stored in a memory which, when executed by a processor, causes the processor to carry out the method for processing information, e.g., S310 to S330 described in conjunction with FIG. 6, S340 to S360 described in conjunction with FIG. 7, S370 to S390 described in conjunction with FIG. 8, or S381 to S382 described in conjunction with FIG. 9.

The above-described embodiments are only schematic, in which the units illustrated as separate components may or may not be physically separated, that is, the device may be located in one place or distributed over several network units. Some or all of the modules can be selected according to the practical needs to achieve the purpose of this embodiment.

According to yet another embodiment of the present disclosure, there is provided a computer-readable storage medium, which stores computer-executable instructions which, when executed by a processor or controller, for example, by a processor in the embodiment of the electronic device, causes the processor to carry out the operations of the method described above, for example, the above-described operations S110 to S140 described in conjunction with FIG. 2, S150 to S170 described in conjunction with FIG. 3, S180 to S200 described in conjunction with FIG.4, S210 to S230 described in conjunction with FIG. 5; or S310 to S330 described in conjunction with FIG. 6, S340 to S360 described in conjunction with FIG.7, S370 to S390 described in conjunction with FIG. 8, S381 to S382 described in conjunction with FIG. 9.

According to an embodiment of the present disclosure, power state information is acquired; the power state information is sent to the cloud server, such that the cloud server generates power state icon information according to the power state information; first cloud desktop information sent by the cloud server is received; where the first cloud desktop information includes the power state icon information; and the first cloud desktop is displayed according to the first cloud desktop information; where the first cloud desktop displays a power state icon corresponding to the power state icon information. According to an embodiment of the present disclosure, power state information is sent to the cloud server, such that the cloud server generates power state icon information according to the power state information, and the cloud server includes the power state icon information in the first cloud desktop information. Thereby, after the first cloud desktop information is received, the first cloud desktop including the power state icon corresponding to the power state icon information can be displayed according to the first cloud desktop information. Accordingly, the power state icon of a user's local terminal device can be displayed on the cloud desktop. That is, according to an embodiment, the power state information of the user's local terminal device can be redirected to the cloud desktop, such that the user can keep the original usage habit and the user's experience is enhanced.

It shall be appreciated by a person having ordinary skills in the art that all or some of the steps and systems disclosed above can be implemented as software, firmware, hardware, and their appropriate combinations. Some or all physical components can be implemented as software executed by a processor, such as a central processing unit, a digital signal processor, or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules, or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules, or other data in modulated data signals such as carrier waves or other transmission mechanisms, and can include any information delivery media.

Described above is a description of several embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

## Claims

1. A method for processing information, comprising,
acquiring power state information;
sending the power state information to a cloud server, such that the cloud server generates power state icon information according to the power state information;
receiving first cloud desktop information sent by the cloud server; wherein the first cloud desktop information comprises the power state icon information; and
displaying a first cloud desktop according to the first cloud desktop information; wherein a power state icon corresponding to the power state icon information is displayed on the first cloud desktop.

2. The method as claimed in claim 1, wherein in response to an inclusion of power level information in the power state information, with the power level information being indicative of a power level less than a preset power level threshold, providing the power state icon as a power level alarm icon.

3. The method as claimed in claim 1, further comprising,
in response to a clicking on the power state icon, sending trigger information to the cloud server, such that the cloud server generates power management interface information according to the trigger information;
receiving second cloud desktop information sent by the cloud server; wherein the second cloud desktop information comprises the power management interface information; and
displaying a second cloud desktop according to the second cloud desktop information; wherein a power management interface corresponding to the power management interface information is displayed on the second cloud desktop.

4. The method as claimed in claim 3, further comprising,
sending power management and configuration information to the cloud server, in response to an information setting operation on the power management interface, such that the cloud server generates a control strategy driving instruction according to the power management and configuration information;
receiving the control strategy driving instruction sent by the cloud server; and
performing power management according to the control strategy driving instruction.

5. The method as claimed in claim 4, wherein performing the power management according to the control strategy driving instruction comprises,
converting the control strategy driving instruction into a power control instruction;
converting the power control instruction into a power driving instruction; and
performing the power management according to the power driving instruction.

6. A method for processing information, comprising,
receiving power state information sent by a terminal device;
generating power state icon information according to the power state information; and
sending first cloud desktop information to the terminal device, such that the terminal device displays a first cloud desktop according to the first cloud desktop information; wherein the first cloud desktop information comprises the power state icon information, and a power state icon corresponding to the power state icon information is displayed on the first cloud desktop.

7. The method as claimed in claim 6, wherein in response to an inclusion of power level information in the power state information, with the power level information being indicative of a power level less than a preset power level threshold, providing the power state icon as a power level alarm icon.

8. The method as claimed in claim 6, further comprising,
receiving trigger information sent by the terminal device; wherein the trigger information is sent by the terminal device in response to a clicking on the power state icon;
generating power management interface information according to the trigger information;
sending second cloud desktop information to the terminal device, such that the terminal device displays a second cloud desktop according to the second cloud desktop information; wherein the second cloud desktop information comprises power management interface information, and a power management interface corresponding to the power management interface information is displayed on the second cloud desktop.

9. The method as claimed in claim 8, further comprising,
receiving power management and configuration information sent by the terminal device; wherein the power management and configuration information is sent by the terminal device in response to an information setting operation performed on the power management interface;
generating a control strategy driving instruction according to the power management and configuration information; and
sending the control strategy driving instruction to the terminal device, such that the terminal device performs power management according to the control strategy driving instruction.

10. The method as claimed in claim 9, wherein generating the control strategy driving instruction according to the power management and configuration information comprises,
generating power control strategy information according to the power management and configuration information; and
converting the power control strategy information into a control strategy driving instruction.

11. A terminal device, comprising,
a device control module, configured to acquire power state information;
a first redirection module, configured to send the power state information to the cloud server, such that the cloud server generates power state icon information according to the power state information; the first redirection module is further configured to receive first cloud desktop information sent by the cloud server; wherein the first cloud desktop information comprises the power state icon information; and
a display module, configured to display a first cloud desktop according to the first cloud desktop information; wherein a power state icon corresponding to the power state icon information is displayed on the first cloud desktop.

12. The terminal device as claimed in claim 11, wherein in response to an inclusion of power level information in the power state information, with the power level information being indicative of a power level less than a preset power level threshold, the power state icon is provided as a power alarm icon.

13. The terminal device as claimed in claim 11, wherein,
the first redirection module is further configured to send trigger information to the cloud server in response to a clicking on the power state icon, such that the cloud server generates power management interface information according to the trigger information;
the first redirection module is further configured to receive second cloud desktop information sent by the cloud server; wherein the second cloud desktop information comprises power management interface information; and
the display module is further configured to display a second cloud desktop according to the second cloud desktop information; wherein a power management interface corresponding to the power management interface information is displayed on the second cloud desktop.

14. The terminal device as claimed in claim 13, wherein,
the first redirection module is further configured to send power management and configuration information to the cloud server, in response to an information setting operation performed on the power management interface, such that the cloud server generates a control strategy driving instruction according to the power management and configuration information;
the first redirection module is further configured to receive the control strategy driving instruction sent by the cloud server; and
the device control module is further configured to perform power management according to the control strategy driving instruction.

15. The terminal device as claimed in claim 14, wherein the device control module comprises a first management and control module, and a first device driving module; and
the first redirection module is further configured to convert the control strategy driving instruction into a power control instruction;
the first management and control module is configured to convert the power control instruction into a power driving instruction; and
the first device driving module is configured to perform power management according to the power driving instruction.

16. A cloud server, comprising,
a second redirection module, configured to receive power state information sent by a terminal device;
an information processing module, configured to generate power state icon information according to the power state information; wherein,
the second redirection module, is further configured to send first cloud desktop information to the terminal device, such that the terminal device displays a first cloud desktop according to the first cloud desktop information; the first cloud desktop information comprises the power state icon information, and a power state icon corresponding to the power state icon information is displayed on the first cloud desktop.

17. The cloud server as claimed in claim 16, wherein in response to an inclusion of power level information in the power state information, with the power level information being indicative of a power level less than a preset power level threshold, the power state icon is provided as a power alarm icon.

18. The cloud server as claimed in claim 16, wherein,
the second redirection module is further configured to receive trigger information sent by the terminal device; wherein the trigger information is sent by the terminal device in response to a clicking on the power state icon;
the information processing module, is further configured to generate power management interface information according to the trigger information; and
the second redirection module, is further configured to send second cloud desktop information to the terminal device, such that the terminal device displays a second cloud desktop according to the second cloud desktop information; wherein the second cloud desktop information comprises power management interface information, and a power management interface corresponding to the power management interface information is displayed on the second cloud desktop.

19. The cloud server as claimed in claim 18, wherein,
the second redirection module is further configured to receive power management and configuration information sent by the terminal device; wherein the power management and configuration information is sent by the terminal device in response to an information setting operation performed on the power management interface;
the information processing module, is further configured to generate a control strategy driving instruction according to the power management and configuration information; and
the second redirection module, is further configured to send the control strategy driving instruction to the terminal device, such that the terminal device performs power management according to the control strategy driving instruction.

20. The cloud server as claimed in claim 19, wherein the information processing module comprises a second management and control module, and a second device driving module;
the second management and control module is configured to generate power control strategy information according to the power management and configuration information; and
the second device driving module is configured to convert the power control strategy information into a control strategy driving instruction.

21. A terminal device, comprising a memory, a processor, and a computer program stored in the memory and executable by the processor which, when executed by the processor causes the processor to carry out the method as claimed in any one of claims 1 to 5.

22. A cloud server, comprising a memory, a processor, and a computer program stored in the memory and executable by the processor which, when executed by the processor causes the processor to carry out the method as claimed in any one of claims 6 to 10.

23. A computer-readable storage medium storing a computer-executable instruction which, when executed by a processor, causes the processor to carry out the method as claimed in any one of claims 1 to 10.
